# FASCICULE DE BREVET EUROPEEN

(11) **EP 0 713 644 B1**
(45) Date de publication et mention de la délivrance du brevet: **13.10.1999**
(21) Numéro de dépôt: 95440078.4
(22) Date de dépôt: 23.11.1995
(51) Int. Cl.: A01M 17/00, A01M 13/00

(54) **Générateur de fumigation de sécurité**
Sicherheitsräuchergerät
Safety fumigator

(30) Priorité: 24.11.1994 FR 9414323
(43) Date de publication de la demande: 29.05.1996
(73) Titulaire: Société GAZANIA, 67100 Strasbourg (FR)
(72) Inventeur: Schmidt, Alex, F-67000 Strasbourg (FR)
(74) Mandataire: Metz, Paul

(56) Documents cités:
- US-A- 4 938 144
- PATENT ABSTRACTS OF JAPAN vol. 15 no. 193 (C-832) ,17 Mai 1991 & JP-A-03 049634 (ASAHI CHEM IND CO LTD) 4 Mars 1991,
- PATENT ABSTRACTS OF JAPAN vol. 13 no. 211 (C-597) ,17 Mai 1989 & JP-A-01 030533 (TAISHO NOUKOURI) 1 Février 1989,
- PATENT ABSTRACTS OF JAPAN vol. 13 no. 211 (C-597) ,17 Mai 1989 & JP-A-01 030532 (TAISHO NOUKOUKI ) 1 Février 1989,

## Description

La présente invention est relative à un procédé de génération d'un gaz toxique ou fumigant utilisable, par exemple, pour la désinfection et la désinsectisation d'un local tel qu'une serre horticole, ainsi qu'au dispositif de mise en oeuvre du procédé selon l'invention.

Afin de détruire les animaux susceptibles d'endommager, par exemple les fleurs cultivées dans une serre, on pratique couramment des opérations de désinsectisation par fumigation en introduisant dans la serre où se trouvent les plantes cultivées un gaz toxique ou fumigant à une concentration mortelle pour les animaux nuisibles ainsi que pour leurs larves.

Les fumigants utilisés dans la lutte contre les insectes nuisibles présentent un caractère fortement toxique pouvant nuire à la santé des opérateurs chargés de les mettre en oeuvre.

Face à ce danger, la seule solution connue actuellement consiste à équiper les opérateurs d'appareillages de protection respiratoire, par exemple du type connu sous le nom de "masque à gaz".

Ces appareillages, plus ou moins bien tolérés par les opérateurs, ne sont pas exempts de toute défaillance technique, et peuvent donc faire courir aux opérateurs des risques importants.

Il était donc nécessaire de proposer un procédé permettant d'éviter totalement aux opérateurs d'être présents dans le volume des émanations gazeuses toxiques dégagées par les générateurs de fumigants employés.

Des fumigants peuvent être obtenus en faisant réagir ensemble au moins deux produits chimiques différents se présentant l'un, par exemple, sous la forme d'un solide, et l'autre sous la forme d'un liquide.

Dans ce cas, les réactions chimiques mises en jeu sont fréquemment violentes et fortement exothermiques.

Il importe donc également de pouvoir contrôler la vitesse de la réaction de production du gaz insecticide afin que celle-ci ne s'emballe pas, et d'éviter les risques de projection hors du générateur chimique.

La présente invention a pour but de remédier à ces difficultés ainsi qu'à d'autres encore, en proposant un procédé de génération d'un fumigant dans un local, par exemple une serre horticole, permettant d'éviter aux opérateurs chargés de sa mise en oeuvre de se trouver dans le milieu de dégagement du gaz toxique, et ce en introduisant un retard dans la mise en contact des réactifs chimiques qui laisse le temps aux opérateurs d'installer les générateurs de fumigant selon l'invention aux endroits voulus du local à traiter, puis de quitter le local avant que celui-ci ne commence à être envahi par le gaz toxique de traitement.

Selon une autre de ses caractéristiques, le procédé permet de contrôler la vitesse de la réaction de production du gaz en limitant les quantités de produits réactifs mises en présence simultanément.

Le procédé selon la présente invention permet également d'éviter les risques de projection dangereuse hors du générateur dans lequel sont introduits les produits de la réaction de production du fumigant.

Par fumigant, on entend un gaz toxique apte à réaliser un traitement de désinsectisation et de destruction des animaux nuisibles et/ou de leurs larves présentes dans le local à traiter.

De façon non limitative, le local traité pourra être une serre horticole ou agricole, un silo de stockage, par exemple de céréales, ou bien encore un compartiment de transport de marchandises à bord d'un navire, d'un wagon ferroviaire ou encore d'un véhicule de transport routier.

Selon un exemple préféré de mise en oeuvre de l'invention, le fumigant pour la désinsectisation sera obtenu en faisant réagir ensemble du cyanure de sodium NaCN et une solution d'acide sulfurique H₂SO₄. Il est cependant évident que la portée de l'invention n'est pas limitée par le choix particulier de ces deux réactifs, et que d'autres produits peuvent être sélectionnés pour obtenir un fumigant.

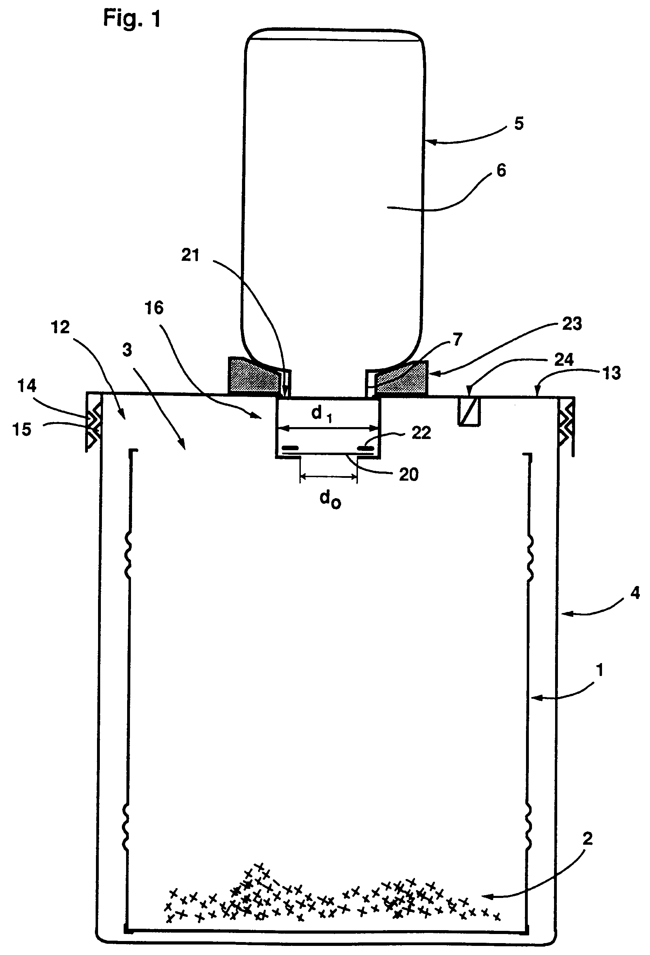

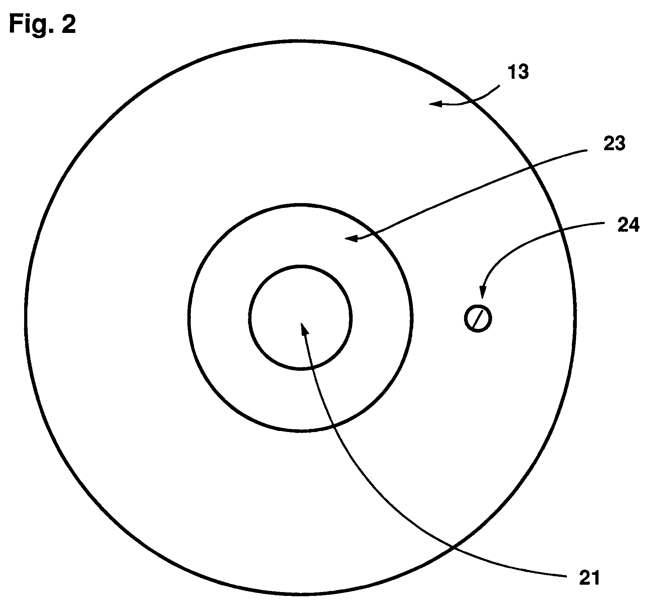

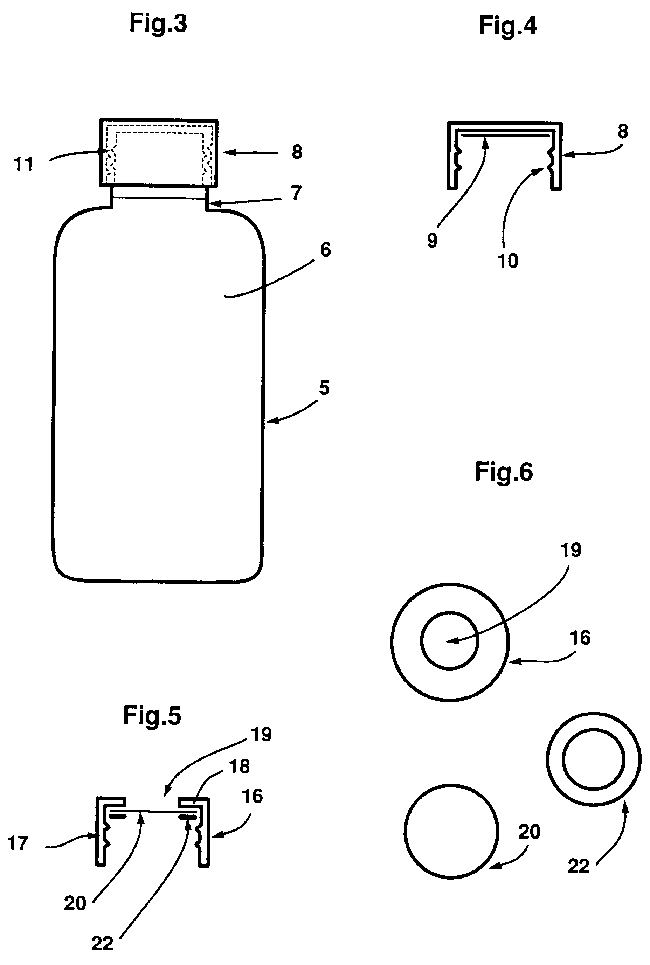

Les caractéristiques techniques et d'autres avantages de la présente invention sont consignés dans la description qui suit, effectuée à titre d'exemple non limitatif et en référence au dessin accompagnant dans lequel :
. la figure 1 est une vue en élévation en position d'utilisation du dispositif de mise en oeuvre du procédé selon l'invention, comportant un générateur chimique enfermé dans un porte-générateur sur lequel est monté un contenant renfermant un réactif liquide ;
. la figure 2 est une vue de dessus du couvercle d'obturation du porte-générateur représenté sur la figure 1 ;
. la figure 3 est une vue en élévation du contenant représenté sur la figure 1 muni de son bouchon de transport et de stockage ;
. la figure 4 est une vue en coupe longitudinale du bouchon de stockage et de transport représenté sur la figure 3 ;
. la figure 5 est une vue en coupe longitudinale du bouchon à ouverture corrodable obturant le contenant en position d'utilisation ;
. la figure 6 est une vue en élevation à l'état dissocié des éléments constitutifs du bouchon applicateur représenté sur la figure précédente.

Une forme particulière et non-limitative d'exécution du générateur de fumigant pour la mise en oeuvre du procédé selon l'invention comprend un générateur chimique 1 renfermant un premier réactif 2 à l'état solide, par exemple des cristaux de cyanure de sodium NaCN.

Immédiatement après remplissage du générateur chimique 1 avec la quantité voulue de granulés de cyanure de sodium 2, son ouverture supérieure de remplissage 3 est hermétiquement close, par exemple par sertissage d'un couvercle de forte épaisseur.

Ce couvercle, non représenté sur les figures, est retiré, classiquement par découpe, juste avant utilisation du générateur chimique 1 et son introduction dans un porte-générateur 4 comme décrit plus en détail ultérieurement.

A titre d'exemple seulement, chaque générateur 1 est garni de 42,5 g de cyanure de sodium NaCN sous forme de cristaux, et sa contenance avantageusement fixée à un litre, de façon à éviter tout risque de projection dangereuse hors de son enceinte réactionnelle en cours de réaction.

Après remplissage et sertissage des générateurs 1 de façon étanche, ceux-ci sont convenablement référencés, par exemple par étiquetage ou par impression, puis conditionnés pour leur transport et leur stockage par lots, préférentiellement de vingt-quatre unités, dans un emballage en carton compartimenté répondant aux exigences de la législation sur le transport des substances chimiques.

Le dispositif est complété par un contenant 5 du type bouteille, flacon ou similaire, renfermant une solution liquide 6 obtenue, par exemple par dilution d'acide sulfurique concentré H₂SO₄ dans de l'eau H₂O.

Pour leur transport et leur stockage, le goulot 7 des contenants 5 est hermétiquement clos après remplissage au moyen d'un bouchon 8 à joint d'étanchéité 9 dont la fermeture est assurée, par exemple par vissage, au moyen de filetages homologues 10 et 11.

Selon une variante d'exécution, le bouchon 8 pourra être du type bouchon de sécurité, afin d'éviter tout risque d'ouverture accidentelle du contenant 5.

Dans l'exemple préféré de mise en oeuvre du présent procédé, chaque contenant 5 de 143 ml de volume utile est complété à 30 ml d'acide sulfurique concentré à 98 % étendu à 142 ml avec de l'eau.

Après remplissage et obturation, les contenants 5 sont également avantageusement regroupés par lots de vingt-quatre unités dans un second emballage compartimenté.

L'installation du générateur de fumigant conforme à la présente invention débute avec la libération de l'ouverture de remplissage 3 du générateur chimique 1 par découpe de son couvercle.

Le générateur chimique 1 renfermant les cristaux de cyanure de sodium NaCN est ensuite introduit dans l'espace intérieur du porte-générateur 4, dont l'ouverture supérieure 12 est ensuite obturée au moyen d'un couvercle 13 de sécurité dont la fermeture étanche est réalisée, par exemple par vissage au moyen de filetages homologues 14 et 15.

Conformément au présent procédé, l'installation du générateur de fumigant se poursuit avec l'ouverture d'un contenant 5 par dévissage de son bouchon 8 de transport et de stockage, auquel on substitue un bouchon applicateur 16, essentiel pour l'invention, et dont la constitution va maintenant être décrite en détail.

Le bouchon applicateur 16 est préférentiellement de mêmes formes et dimensions géométriques que le bouchon 8 pour le transport et le stockage des contenants 5 auquel il se substitue.

En particulier, le bouchon applicateur 16 est muni d'un filetage 17 adapté au filetage 10 prévu sur le goulot 7 du contenant 5.

Le bouchon applicateur 16 présente, au niveau d'une paroi de fond 18, une ouverture centrale d'écoulement 19 dont le diamètre d₀ est sensiblement inférieur au diamètre d₁ de ce bouchon 16.

Par ailleurs, et selon la caractéristique essentielle de l'invention, on loge dans le fond ouvert 18 du bouchon applicateur 16 une obturation provisoire ou temporaire sous la forme d'une lentille ou d'une pastille 20 disposée entre la fin du filetage 17 et la paroi de fond 18.

Cette pastille 20 est destinée à remplir la fonction d'obturateur à ouverture progressive du bouchon applicateur 16.

Elle sera réalisée en toute matière simple ou composite, monobloc ou agglomérée, lui permettant d'être transpercée par action de la solution d'acide 6.

Un exemple de réalisation prendra la forme d'une simple pastille de gélatine affectant un profil, par exemple plat ou bombé.

On peut également envisager de déposer une couche de gélatine, par exemple sur un support tissé à mailles plus ou moins resserrées, de façon à limiter le débit de la solution d'acide 6 après dissolution de ladite couche de gélatine.

En substitution de la gélatine, on peut envisager toute matière facilement attaquable par la solution d'acide 6 renfermée dans le contenant 5 telle que, par exemple, un film hydrosoluble.

Cette combinaison de moyens permet de créer le retard à l'initiation de la réaction de production du fumigant, retard mis à profit par le (ou les) opérateur(s) pour quitter le local à traiter avant que celui-ci ne commence à s'emplir du gaz toxique de traitement.

En effet, après remplacement de son bouchon 8 de transport et de stockage par un bouchon applicateur 16, le contenant 5 est engagé verticalement, bouchon applicateur 16 orienté vers le bas, dans une ouverture centrale 21 prévue à cet effet dans le couvercle 13 d'obturation du porte-générateur 4.

La solution 6 d'eau et d'acide sulfurique renfermée dans le contenant 5 vient alors au contact de la pastille 20 qui commence à se dissoudre ou à se désagréger, son épaisseur diminuant progressivement.

Néanmoins, la pastille 20 continue à jouer son rôle de barrière étanche à la solution 6 jusqu'à ce que son épaisseur résiduelle soit telle que sa résistance mécanique n'est plus suffisante pour s'opposer à la force de pesanteur exercée par la colonne de solution d'acide 6 située au-dessus d'elle et qu'elle cède sous l'effet de cette force.

Cette résistance pourra être améliorée par une armature tissée, un fin tamis métallique ou toute autre structure analogue.

La solution 6 peut alors s'écouler hors du contenant 5 par l'ouverture 19 du bouchon applicateur 16 et venir mouiller progressivement les cristaux de cyanure de sodium 2 renfermés dans le générateur chimique 1, initiant de la sorte la réaction de production d'acide cyanhydrique gazeux HCN.

La valeur du diamètre d₀ de l'ouverture d'écoulement 19 du bouchon applicateur 16 détermine la quantité d'air pouvant entrer dans le contenant 5 au moment où la pastille de gélatine 20 cède et, par conséquent, le débit de la solution d'acide 6.

Cette valeur devra être choisie suffisamment grande afin de permettre l'admission d'une quantité d'air permettant l'écoulement normal de la solution d'acide 6 hors du contenant 5, tout en évitant l'emballement de la réaction par un débit de la solution d'acide trop élevé.

Elle sera avantageusement fixée à 14 mm, valeur pour laquelle la solution d'acide 6 s'échappe du contenant 5 en vingt secondes environ, et la réaction est achevée au bout de quarante secondes environ.

Il est ainsi possible, par un choix judicieux de la valeur du diamètre d₀ de l'ouverture centrale 19 du bouchon applicateur 16, d'éviter tout risque d'emballement de la réaction, tout en permettant à celle-ci de se produire dans un délai suffisamment bref pour obtenir un pic élevé de concentration en gaz de traitement dans l'atmosphère du local traité.

La durée du retard au début de la réaction de production du fumigant peut être contrôlée par l'épaisseur initiale de la pastille 20 et/ou par le nombre de pastilles disposées à recouvrement les unes sur les autres en fond de bouchon applicateur 16.

En effet, plus cette épaisseur initiale sera importante, plus long sera le temps nécessaire à la solution d'acide 6 renfermée dans le contenant 5 pour parvenir à dissoudre, puis finalement rompre sous l'effet de son poids, ladite pastille 20.

D'après un résultat remarquable du procédé selon la présente invention, on peut donc fixer la durée du retard au démarrage de la réaction de fumigation de façon reproductible et précise, en lui donnant une valeur suffisamment importante, par exemple dix minutes à 20°C, pour laisser le temps à l'opérateur de disposer les générateurs de fumigant dans le local à traiter, puis de quitter celui-ci en toute sécurité, avant le début de la réaction.

Une rondelle de sécurité et de maintien 22 est avantageusement disposée à recouvrement sur la pastille 20 en fond de bouchon applicateur 16.

Comme déjà décrit, le contenant 5 renfermant la solution d'acide 6 est présenté, bouchon applicateur 16 orienté vers le bas, face à l'ouverture centrale 21 prévue à cet effet dans le couvercle 13 d'obturation du porte-générateur 4.

Le contenant 5 est immobilisé et verrouillé sur le couvercle 13 du porte-générateur 4 par un encliquetage anti-retour entre l'ouverture 21 et le chant arrière du bouchon applicateur 16. Cet effet est obtenu par la différence de diamètre entre l'ouverture centrale 21 et le diamètre d₁ du bouchon 16, ainsi que par la souplesse de la matière constituant le couvercle 13.

Lorsque le bouchon applicateur 16 a dépassé l'ouverture 21 du couvercle 13, le retrait du contenant 5 est impossible, le bouchon 16 venant par son chant arrière en butée de blocage contre le rebord périmétrique de l'ouverture centrale 21 en raison des différences de diamètre.

Le contenant 5 repose par la naissance de son col sur le couvercle 13 selon un anneau 23, par exemple réalisé en une mousse synthétique, lui servant de siège et assurant l'étanchéité entre le contenant 5 et les bords de l'ouverture centrale 21 du couvercle 13.

De préférence, le générateur chimique 1 est réalisé en acier ou en aluminium, ses parois latérales intérieures étant avantageusement recouvertes d'un vernis résistant à l'acide sulfurique.

Le porte-générateur 4 et le contenant 5 seront réalisés quant à eux dans une même matière, par exemple en un matériau plastique transparent, résistant aux réactifs employés, aux produits finaux de la réaction de production du fumigant ainsi qu'à la chaleur.

Selon l'exemple préféré et non-limitatif de mise en oeuvre du présent procédé, la réaction de production d'acide cyanhydrique gazeux HCN est réalisée par mise en contact de 42,5 g de cristaux de cyanure de sodium NaCN contenus dans le générateur chimique 1, et de 30 ml d'acide sulfurique concentré à 98 % étendu à 142 ml avec de l'eau renfermé dans le contenant 5.

On produit ainsi 23,4 g d'acide cyanhydrique gazeux dont, d'après les analyses, 0,5 g sont retenus en solution dans le générateur 1.

La quantité de gaz disponible pour les traitements est donc de 23 g environ par générateur, ce qui correspond à un volume de gaz d'environ vingt litres sous conditions normales de pression et de température.

L'étanchéité du porte-générateur 4 étant réalisée par son couvercle à vis 13 d'une part, et par l'anneau de mousse 23 d'autre part, sa mise en communication avec l'air du local à traiter s'opère au moyen d'un dispositif d'échappement 24 du type sifflet, par lequel la totalité du gaz s'échappe en l'actionnant en continu.

Le signal sonore, audible sur de grandes distances, avertit les opérateurs du début de la réaction de production du fumigant, et du bon fonctionnement des générateurs.

Réciproquement, l'extinction du signal sonore les avertit de la fin de la réaction.

Conformément au présent procédé, la dose d'utilisation préconisée pour un traitement d'entretien courant est de un générateur pour 2000 m³ de local à traiter, soit 11,5 mg d'acide cyanhydrique gazeux par mètre cube, ou encore 10 ppm (parties par millions).

Pour un traitement intensif, les quantités de gaz peuvent être quadruplées, ce qui correspond à des doses de gaz de l'ordre de 40 ppm.

Dans les deux cas, les quantités de gaz produites restent sensiblement inférieures aux limites de toxicité pour l'homme

A titre d'exemple, la V.L.E. ou valeur limite d'exposition aux émanations d'acide cyanhydrique gazeux est fixée en France à 10 ppm.

La V.L.E. est la valeur qui, si elle s'établit dans un local tel qu'un atelier, peut être respirée sans danger par le personnel qui s'y trouve pendant un quart d'heure, l'évacuation des locaux n'étant ordonnée qu'après ce délai, et sous réserve que le taux d'acide cyanhydrique gazeux n'a pas diminué entre-temps.

Les traitements légers qui débutent à 10 ppm et qui ne peuvent aller qu'en diminuant entrent donc dans le cadre de ce qui est permis par la V.L.E.

Ce n'est pas le cas des traitements forts qui débutent à 40 ppm. Les différents auteurs s'accordent toutefois pour dire que 50 ppm respirés pendant une demi-heure ne produisent pas de symptômes, et que 20 ppm pendant une heure ou plus sont sans effet, les concentrations réellement dangereuses pour des temps d'exposition de trente minutes se situant au-delà de 100 ppm.

Le présent procédé s'avère particulièrement efficace dans la lutte contre des insectes, notamment du type aleurodes ou aphidés qui, dans les serres horticoles où ils se développent, causent d'importants dégâts aux végétaux cultivés.

Il peut être utilisé seul ou en association avec des insecticides pulvérisés ou systémiques. Il sera très utile pour enrayer les infestations et pour soulager les plantes qui peuvent être incommodées par l'usage répété de certains produits.

Utilisé à forte dose, c'est-à-dire de l'ordre de 40 ppm de gaz d'acide cyanhydrique, le procédé permet d'éliminer les insectes à tous leurs stades de développement : oeufs, larves et adultes.

Utilisé à doses plus faibles, de l'ordre de 10 ppm de gaz, le procédé n'atteint pas les formes pré-adultes des insectes, et peut ainsi être avantageusement utilisé comme recours dans le cadre de la lutte biologique contre les insectes, par exemple du type pré-cité.

Les résidus liquides contenus dans chaque générateur renferment 12,7 g d'acide sulfurique en excès et 0,5 g d'acide cyanhydrique en solution.

Le cyanure en solution s'élimine par évaporation, les résidus éventuels pouvant être neutralisés par voie chimique, au moyen d'hypochlorite de sodium.

Enfin, l'acide sulfurique est classiquement neutralisé par addition de carbonate de sodium.

Les résidus ainsi obtenus ne renferment plus aucune substance dangereuse en quantité notable et peuvent être rejetés à l'égout.

## Revendications

1. Procédé de génération d'un produit fumigant pour la désinfection et la destruction des parasites et des animaux nuisibles se trouvant dans des locaux fermés destinés à recevoir des marchandises, notamment des céréales en vrac, ou abritant des cultures végétales, par mise en contact d'au moins deux produits chimiques (2,6) dont l'un au moins est en phase liquide, lesdits produits étant initialement renfermés dans des contenants (1,5) séparés, caractérisé en ce que l'on diffère le démarrage de la réaction de génération du gaz de traitement insecticide en retardant la mise en contact des produits chimiques (2,6), afin de laisser à l'opérateur chargé de la mise en oeuvre du procédé le temps de quitter le local à traiter avant que celui-ci ne commence à s'emplir dudit gaz de traitement.

2. Procédé selon la revendication 1, caractérisé en ce que l'on retarde la libération du réactif liquide (6).

3. Procédé selon la revendication 2, caractérisé en ce que l'on munit le contenant (5) renfermant le produit chimique (6) en phase liquide d'un bouchon (16) présentant une ouverture d'écoulement (19) fermée par une obturation temporaire sous la forme d'une pastille (20), cette pastille étant réalisée en une matière lui permettant d'être transpercée par le produit chimique (6) en phase liquide après un temps déterminé de contact avec celui-ci correspondant au retard visé avant l'initiation de la réaction de fumigation, le produit chimique liquide (6) venant ensuite mouiller le (ou les) produit(s) chimique(s) (2) disposé(s) à l'intérieur du contenant (1) séparé.

4. Procédé selon la revendication 3, caractérisé en ce que la pastille (20) est réalisée en gélatine.

5. Procédé selon l'une quelconque des revendications précédentes, caractérisé en ce que l'on produit de l'acide cyanhydrique gazeux HCN par mise en contact de 42,5 g de cyanure de sodium NaCN contenu dans le générateur (1), et de 30 ml d'acide sulfurique H₂SO₄ concentré à 98 % étendu à 142 ml avec de l'eau renfermé dans le contenant (5).

6. Procédé selon la revendication 5, caractérisé en ce qu'on l'utilise en complément d'un traitement de lutte insecticide biologique.

7. Dispositif pour la mise en oeuvre du procédé selon l'une quelconque des revendications précédentes, caractérisé en ce qu'il est constitué d'un générateur chimique (1) ouvert par le haut dans lequel est introduit le premier produit chimique (2) de la réaction de fumigation, un contenant (5) renfermant le second produit chimique (6) en phase liquide étant disposé au-dessus du générateur chimique (1), son ouverture de remplissage (7) étant dirigée vers le fond du générateur (1) et obturée par un bouchage (16) comportant une pièce (20) attaquable par le produit chimique liquide (6).

8. Dispositif selon la revendication précédente, caractérisé en ce que le générateur (1) est disposé à l'intérieur d'un porte-générateur (4) dont l'ouverture supérieure (12) est ensuite obturée de façon étanche au moyen d'un couvercle (13), le contenant (5) étant engagé verticalement, bouchon (16) orienté vers le bas, dans une ouverture (21) formée dans ledit couvercle (13).

9. Dispositif selon la revendication 8, caractérisé en ce que le couvercle (13) est muni d'un dispositif d'échappement sonore (24).

10. Dispositif selon l'une quelconque des revendications 8 ou 9, caractérisé en ce que le contenant (5) repose sur le couvercle (13) d'obturation du porte-générateur (4) selon un anneau (23) lui servant d'assise, et réalisant l'étanchéité entre ledit contenant (5) et les bords de l'ouverture centrale (21) dudit couvercle (13).

## Claims

1. Process for the generation of a fumigant product for disinfecting and destroying parasites and vermin which are found in closed rooms which are intended for receiving goods, in particular bulk cereals, or which accommodate vegetable crops, by bringing into contact at least two chemical products (2, 6), of which at least one is in the liquid phase, said products initially being held in separate containers (1, 5), characterised in that the initiation of the reaction for the generation of the insecticide treatment gas is deferred by delaying the bringing into contact of the chemical products (2, 6) in order to allow the operator, who is responsible for carrying out the process, time to leave the room to be treated before the room begins to fill with the treatment gas.

2. Process according to claim 1, characterised in that the release of the liquid reagent (6) is delayed.

3. Process according to claim 2, characterised in that the container (5) which holds the chemical product (6) in the liquid phase is provided with a stopper (16) which forms a pouring opening (19) which is closed by a temporary closure means in the form of a disc (20), the disc being produced from a material which permits the passage of the chemical product (6) in the liquid phase after a specific time in contact therewith which corresponds to the intended delay before the initiation of the fumigation reaction, the liquid chemical product (6) then wetting the chemical product(s) (2) which are arranged inside the separate container (1).

4. Process according to claim 3, characterised in that the disc (20) is produced from gelatin.

5. Process according to any one of the preceding claims, characterised in that gaseous hydrocyanic acid HCN is produced by bringing into contact 42.5 g of sodium cyanide NaCN which is contained in the generator (1) and 30 ml of 98%-concentrate sulphuric acid H₂SO₄ which is diluted with water which is held in the container (5) to produce 142 ml.

6. Process according to claim 5, characterised in that a biological insecticide control treatment is used as a complementary measure.

7. Device for carrying out the process according to any one of the preceding claims characterised in that it is constituted by a chemical generator (1) which is open at the top and into which is introduced the first chemical product (2) of the fumigation reaction, a container (5) which holds the second chemical product (6) in the liquid phase being arranged above the chemical generator (1), the filling opening (7) of the container (5) being directed towards the base of the generator (1) and blocked by a stopper (16) which comprises a component (20) which is susceptible to attack by the liquid chemical product (6).

8. Device according to the preceding claim, characterised in that the generator (1) is arranged inside a generator-carrier (4) whose upper opening (12) is then blocked in a sealed manner by means of a cover (13), the container (5) being engaged vertically, with its stopper (16) orientated downwards, in an opening (21) which is formed in the cover (13).

9. Device according to claim 8, characterised in that the cover (13) is provided with a sounding escape device (24).

10. Device according to either claim 8 or claim 9, characterised in that the container (5) rests on the cover (13) for closing the generator-carrier (4) by way of a ring (23) which serves as a seat for the container (5) and which forms the seal between the container (5) and the edges of the central opening (21) of the cover (13).

## Patentansprüche

1. Verfahren zur Erzeugung eines ein Gas freisetzenden Produktes zur Desinfektion und zur Vernichtung von Parasiten und Schädlingen in geschlossenen Räumen, die Schüttgut, insbesondere Getreide, oder Pflanzenkulturen aufnehmen, indem wenigstens zwei Chemikalien (2, 6), von denen wenigstens eine in flüssiger Phase vorliegt, in Kontakt gebracht werden und die Chemikalien zunächst in getrennten Behältern (1, 5) untergebracht sind, dadurch gekennzeichnet, daß der Reaktionsstart zur Bildung des Gases zur Insektenvernichtung verzögert wird, indem der Kontakt der Chemikalien (2, 6) verzögert wird, um der das Verfahren durchführenden Person die zum Verlassen des zu behandelnden Raumes erforderliche Zeit zu lassen, bevor sich der Raum mit dem Gas zur Schädlingsvernichtung zu füllen beginnt.

2. Verfahren nach Anspruch 1, dadurch gekennzeichnet, daß die Freisetzung der flüssigen Chemikalie (6) verzögert wird.

3. Verfahren nach Anspruch 2, dadurch gekennzeichnet, daß der Behälter (5) mit der Chemikalie (6) in flüssiger Phase mit einer Kappe (16) versehen wird, die eine durch einen temporären Verschluß in Form eines Plättchens (20) verschlossene Anslauföffnung aufweist, wobei das Plättchen aus einem für die Chemikalie (6) in flüssiger Phase nach einer vorbestimmten, der angestrebten Verzögerung entsprechenden Kontaktzeit vor der Initiierung der das Gas freisetzenden Reaktion durchdringbaren Material gebildet ist, und die in dem getrennten Behälter (1) gehaltene oder gehaltenen Chemikalie(n) (2) anschließend mit der flüssigen Chemikalie (6) benetzt wird (werden).

4. Verfahren nach Anspruch 3, dadurch gekennzeichnet, daß das Plättchen (20) aus Gelatine gebildet ist.

5. Verfahren nach einem der vorangehenden Ansprüche, dadurch gekennzeichnet, daß gasförmige Blausäure HCN durch Kontakt von in dem Reaktionsbehälter (1) gehaltenen 42,5 g Natriumcyanid NaCN mit in dem Behälter (5) gehaltenen, mit Wasser auf 142 ml verdünnten 30 ml 98%iger Schwefelsäure H₂SO₄ gebildet wird.

6. Verfahren nach Anspruch 5, dadurch gekennzeichnet, daß zusätzlich ein biologisches Insektenbekämpfungsmittel verwendet wird.

7. Vorrichtung zur Durchführung des Verfahrens gemäß einem der vorangehenden Ansprüche, dadurch gekennzeichnet, daß ein an der Oberseite offener Reaktionsbehälter (1), in den die erste Chemikalie (2) der das Gas freisetzenden Reaktion einbringbar ist, und ein oberhalb des Reaktionsbehälters (1) angeordneter, die in flüssiger Phase vorliegende zweite Chemikalie (6) aufnehmender Behälter (5) vorgesehen sind, dessen Füllöffnung (7) in Richtung des Bodens des Reaktionsbehälters (1) angeordnet und mit einer Kappe (16) verschlossen ist, die ein von der füssigen Chemikalie (6) chemisch angreifbares Element (17) aufweist.

8. Vorrichtung nach Anspruch 7, dadurch gekennzeichnet, daß der Reaktionsbehälter (1) im Innern einer Trageinrichtung (4) angeordnet ist, deren obere Einführungsöffnung (12) mittels eines Deckels (13) gasdicht verschließbar ist, wobei der Deckel (13) eine Öffnung (21) zur vertikalen Befestigung des Behälters (5) in einer mit der Kappe (16) nach unten ausgerichteten Position aufweist.

9. Vorrichtung nach Anspruch 8, dadurch gekennzeichnet, daß der Deckel (13) mit einer beim Gasaustritt ein akustisches Signal erzeugenden Einrichtung (24) versehen ist.

10. Vorrichtung nach Anspruch 8 oder 9, dadurch gekennzeichnet, daß der Behälter (5) mittels eines als Sitz dienenden Halterings (23) auf dem Verschlußdeckel (13) der Trageinrichtung (4) ansetzbar ist und der Haltering für die Dichtigkeit zwischem dem Behälter (5) und dem Rand der zentralen Öffnung (21) des Deckels (13) sorgt.
